**Europäisches Patentamt**

**European Patent Office**

**Office européen des brevets**

(11) Veröffentlichungsnummer : **0 504 133 A2**

(12) **EUROPÄISCHE PATENTANMELDUNG**

(21) Anmeldenummer : **92890056.2**

(22) Anmeldetag : **12.03.92**

(51) Int. Cl.$^5$ : **G01M 15/00**

(30) Priorität : **13.03.91 AT 563/91**

(43) Veröffentlichungstag der Anmeldung :
**16.09.92 Patentblatt 92/38**

(84) Benannte Vertragsstaaten :
**AT DE FR GB IT SE**

(71) Anmelder : **AVL Gesellschaft für
Verbrennungskraftmaschinen und
Messtechnik mbH.Prof.Dr.Dr.h.c. Hans List
Kleiststrasse 48
A-8020 Graz (AT)**

(72) Erfinder : **Kunzfeld, Wilhelm
Stiftingtalstrasse 71
A-8010 Graz (AT)**

(74) Vertreter : **Klein, Adam, Dipl.Ing. et al
Patentanwälte Dipl.Ing. Adam Klein, Dipl.Ing.
Rudolf Pinter, Fasangasse 49
A-1030 Wien (AT)**

(54) **Verfahren und Anordnung zur Aufwärmung von Brennkraftmaschinen auf einem Prüfstand.**

(57)    Zur raschen Aufwärmung von auf einem Prüfstand (1,2) betriebenen Brennkraftmaschinen (4,5) auf Betriebstemperatur wird - jeweils bedarfsweise einzeln oder in Kombination - die Wärmeabfuhr über den Kühlmittelstrom der Brennkraftmaschine (4,5) reduziert bzw. zur Wärmezufuhr umgekehrt oder die Wärmeabfuhr über das Schmiermittel der Brennkraftmaschine (4,5) reduziert bzw. zur Wärmezufuhr umgekehrt, und die Verlustleistung dadurch erhöht, daß die jeweilige Brennkraftmaschine (4,5) mittels einer Schleppeinrichtung (17) mit einer gegenüber der Nenndrehzahl erhöhten Drehzahl angetrieben wird.

Fig.1

**EP 0 504 133 A2**

Die Erfindung betrifft ein Verfahren zur Aufwärmung von auf einem Prüfstand betriebenen, jeweils über einen Kühlmittelstrom gekühlten und mit flüssigem Schmiermittel geschmierten Brennkraftmaschinen auf Betriebstemperatur. Weiters betrifft die Erfindung auch eine Anordnung zur Aufwärmung von auf einem Prüfstand betriebenen, jeweils eine von Kühlmittel durchströmte Kühleinrichtung und eine Flüssigkeitsschmierung aufweisenden Brennkraftmaschinen auf Betriebstemperatur.

Insbesonders im Zusammenhang mit Produktionsprüfständen, auf denen neu gefertigte Brennkraftmaschinen nach erfolgter Montage eingefahren, geprüft und eingestellt, und - soferne keine Fehler diagnostiziert werden - abgenommen werden, muß die Verweilzeit der einzelnen Brennkraftmaschinen am Prüfstand sehr kurz gehalten werden, damit die Prüfkosten niedrig bleiben. Kurze Verweilzeiten sind aber ohne Qualitätseinbußen nur dann möglich, wenn alle am Prüfstand durchzuführenden Operationen und dabei insbesonders das Einfahren zeitminimiert sind. Ein kurzes Einfahren auf derartigen Prüfständen ist ohne qualitative Verschlechterung des Ergebnisses nur durch scharfes Einfahren möglich, was wiederum nur dann zulässig ist, wenn die jeweilige Brennkraftmaschine, und hier insbesonders der Reibung ausgesetzte Bauteile wie Kolben, Büchsen, Gleitlagerstellen und dergleichen, Betriebstemperatur aufweist.

Aus diesem Grunde wird das sogenannte Einfahren in zwei Etappen unterteilt; in der ersten Etappe wird gemäß heutigem Stande der Technik durch Laufenlassen der Brennkraftmaschine bei höherer Drehzahl und ohne Last eine Aufwärmung abgewartet, wonach in der zweiten Etappe durch bestimmte Variationen der Drehzahlen und Lasten die Leistung der Brennkraftmaschine allmählich bis zur Maximalleistung gesteigert und gehalten wird. Da der Gradient der Aufwärmung der Brennkraftmaschine sowohl von der inneren Verlustleistung wie auch von der von außen zugeführten Wärme und von der Motormasse abhängt, sind geringzylindrige Brennkraftmaschinen niedriger Nenndrehzahl bei dieser Aufwärmung gegenüber vielzylindrigen Motoren mit hohen Nenndrehzahlen stark im Nachteil. So muß insbesonders bei gegenüber der in einer Brennkraftmaschinenfamilie zulässigen Maximaldrehzahl auf niedrigerer Nenndrehzahl laufenden Brennkraftmaschinen nach diesem einfachen bekannten Verfahren oft eine Aufwärmphase in der Dauer von 15 bis 25 Minuten in Kauf genommen werden, was die Prüfkosten signifikant in die Höhe treibt.

Aufgabe der vorliegenden Erfindung ist es, daß die genannten Nachteile der eingangs angesprochenen Verfahren bzw. Anordnungen vermieden werden und daß insbesonders auf möglichst einfache und kostengünstige Weise eine Verkürzung der in der ersten Etappe des Einfahrens erforderlichen Aufwärmung der Brennkraftmaschine auf Betriebstemperatur ermöglicht wird, ohne daß negative Auswirkungen auf die Qualität der Prüfung bzw. auf das Funktionieren der geprüften Brennkraftmaschine auftreten.

Dies wird gemäß der vorliegenden Erfindung bei einem Verfahren der eingangs genannten Art dadurch erreicht, daß - abhängig von einer Referenztemperatur, vorzugsweise der Temperatur des Schmiermittels, jeweils bedarfsweise zusätzlich zu weiteren Maßnahmen, bei denen z.B. die Wärmeabfuhr über den Kühlmittelstrom reduziert bzw. zur Wärmezufuhr umgekehrt wird, oder die Wärmeabfuhr über das Schmiermittel reduziert bzw. zur Wärmezufuhr umgekehrt wird - die Verlustleistung der Brennkraftmaschinen dadurch erhöht wird, daß die jeweilige Brennkraftmaschine mittels einer Schleppeinrichtung mit einer gegenüber der Nenndrehzahl erhöhten Drehzahl angetrieben wird, die bevorzugt natürlich maximal der entspricht, wie sie für die jeweilige Brennkraftmaschinenfamilie zugelassen ist.

Die entsprechende Anordnung ist neben einer gegebenenfalls auch vorhandenen Einrichtung zur bedarfsweisen Reduzierung bzw. Umkehrung der Wärmeabfuhr über das Kühlmittel, bzw. einer Einrichtung zur bedarfsweisen Reduzierung bzw. Umkehrung der Wärmeabfuhr über das Schmiermittel erfindungsgemäß gekennzeichnet durch eine Schleppeinrichtung zur bedarfsweisen Erhöhung der Verlustleistung der Brennkraftmaschinen, wozu die jeweilige Brennkraftmaschine mit einer gegenüber der Nenndrehzahl erhöhten Drehzahl schleppbar ist.

Es wird damit also bedarfsweise (d.h. üblicherweise dann, wenn eine bestimmte Brennkraftmaschine innerhalb einer für den Prüfstandsbetrieb vertretbaren Zeit, beispielsweise 7 Minuten, die Betriebstemperatur, beispielsweise an einer Referenzstelle des Zylinderkopfes bei 80 % der Vollast gemessen, nicht erreicht) der Brennkraftmaschine zusätzlich von außen Energie zugeführt und zwar über den Kühlmittelstrom und/oder das Schmiermittel sowie insbesonders über eine auftretende erhöhte Verlustleistung beim zündungslosen Schleppen der Brennkraftmaschine oberhalb ihrer Nenndrehzahl. Die Auswahl bzw. Kombination der genannten Möglichkeiten kann speziell auf einen bestimmten Typus von Brennkraftmaschine abgestimmt werden, sodaß abgesehen von einer möglichst raschen Aufwärmung bei Anwendung aller genannten Möglichkeiten auch auf eine möglichst gleiche Aufwärmzeit für verschiedene geprüfte Brennkraftmaschinen zur Vergleichmäßigung des Prüfbetriebes abgezielt werden kann.

Bei flüssigkeitsgekühlten Brennkraftmaschinen können in weiterer Ausgestaltung der Erfindung die Kühlräume der Brennkraftmaschine mit aufgeheiztem Kühlmittel, vorzugsweise mit einer Temperatur von annähernd 80°C, gefüllt und fortlaufend durchströmt werden, wozu gemäß einer Weiterbildung der Anordnung nach der Erfindung eine an die Kühlräume der Brennkraftmaschine über Verbindungsleitungen anschließbare Aufheizanordnung und vorzugsweise auch eine zugehörige Umwälzanordnung für das Kühlmittel vorgesehen sein kann. Damit erfolgt auf einfache Weise eine Erwärmung der Brennkraftmaschine von den Bereichen aus, in denen im normalen Betrieb der Brennkraftmaschine auch die zu kühlenden Wärmequellen liegen, was dem tatsächlichen Betrieb der Brennkraftmaschine zumindest weitgehend gleiche Prüfbedingungen sicherstellt.

Bei luftgekühlten Brennkraftmaschinen kann in weiterer Ausgestaltung des erfindungsgemäßen Verfahrens zur Reduzierung der Wärmeabfuhr über den Kühlmittelstrom der Luftdurchsatz des Kühlgebläses, vorzugsweise durch Drosselung, herabgesetzt werden, da in diesem Falle eine Erwärmung über aufgeheiztes Kühlmittel selbst nur bei unverhältnismäßig großem Mehraufwand sinnvoll wäre.

Zur Wärmezufuhr über das Schmiermittel kann nach einer anderen bevorzugten Ausgestaltung der Erfindung das Schmiermittel in einer By-Pass-Leitung des Schmiermittelkreislaufes, vorzugsweise über eine Heizanordnung, aufgeheizt werden. Auf diese Weise erfolgt wiederum die Wärmezufuhr direkt zu den im normalen Betrieb der Brennkraftmaschine selbst Reibungswärme produzierenden Stellen, sodaß eine sehr realistische Aufwärmung der Brennkraftmaschine erzielt wird.

Nach einer besonders bevorzugten Ausbildung der Erfindung ist vorgesehen, daß zur Aufheizung des Kühlmittels und/oder des Schmiermittels zumindest zum Teil Kühlmittel und/oder Schmiermittel aus der Lastphase einer jeweils parallel geprüften Brennkraftmaschine verwendet wird. Für die erfindungsgemäße Anordnung bedeutet dies, daß die Aufheizanordnung für das flüssige Kühlmittel bzw. die Heizanordnung für das Schmiermittel zumindest zu einem Teil von einer Kühleinrichtung einer in der Lastphase befindlichen, parallel geprüften Brennkraftmaschine gebildet ist. Damit kann Abwärme, beispielsweise in Form von heißem Kühlwasser, die aus der Lastprüfphase von parallel betriebenen Prüfständen fortlaufend anfällt, wirtschaftlich dadurch genutzt werden, daß mit diesem Heißwasser (bzw. mit von diesem Heißwasser über einen entsprechenden Wärmetauscher erwärmtem Kühlmittel) die aufzuwärmende Brennkraftmaschine gefüllt und fortlaufend gespült wird. Es ist dabei beispielsweise auch möglich, eine größere Anzahl von parallel betriebenen Prüfständen direkt oder über Wärmetauscher an ein Reservoir mit auf Betriebstemperatur gehaltenem Kühlmittel anzuschließen, wobei dann eben die gerade in der Lastphase laufenden Brennkraftmaschinen ihren Teil zur Erwärmung des Kühlmittels beitragen und der Rest erforderlichenfalls über eine separate Heizeinrichtung des Reservoirs aufgebracht wird. Ähnliches gilt auch für den zweiten erwähnten Fall der Aufheizung des Schmiermittels, welches entweder analog über bereits Betriebstemperatur aufweisendes Schmiermittel von auf parallelen Prüfständen laufenden Brennkraftmaschinen, oder aber mittels geeigneter Wärmetauscher wiederum über das Kühlmittel erwärmt werden kann.

Zur Ableitung und Wiederzuführung von Kühlmittel und/oder Schmiermittel werden bevorzugt an der jeweiligen Brennkraftmaschine für die Entleerung bzw. Wiederauffüllung ohnedies vorhandene Öffnungen verwendet. Im Falle des Schmiermittels wird dieses bevorzugt an der tiefsten Stelle der Ölwanne abgesaugt und über eine Förderpumpe und einen Wärmetauscher zur höchsten Stelle der Brennkraftmaschine (dem Ventildeckel) wieder rückgeführt. Damit werden vor allem die Gleitlagerstellen und die Kurbelwelle der Brennkraftmaschine rasch auf Betriebstemperatur gebracht.

Nach einer weiteren Ausgestaltung der erfindungsgemäßen Anordnung ist vorgesehen, daß die Schleppeinrichtung einen Elektromotor aufweist und mit einer im Bremsbetrieb elektrische Energie abgebenden Bremseinrichtung einer parallel geprüften Brennkraftmaschine in Verbindung steht, womit bei der erwähnten Erwärmung über eine Erhöhung der Verlustleistung die beim Bremsen in der Lastphase einer parallel geprüften Brennkraftmaschine anfallende Energie, vorzugsweise elektrische Energie, zur Betätigung der Schleppeinrichtung, vorzugsweise eines Elektromotors, verwendet wird. Es ist dabei belanglos, ob die beim Bremsen in der Lastphase erhaltene elektrische Energie direkt oder über geeignete Zwischenspeicher (Netz, Akkumulatoren und dergleichen) zur Betätigung der Schleppeinrichtung verwendet wird bzw. werden kann wesentlich ist, daß durch diese Maßnahme zumindest ein Teil der beim Bremsen in der Lastphase anfallenden Energie sinnvoll wieder zur Erwärmung genutzt werden kann.

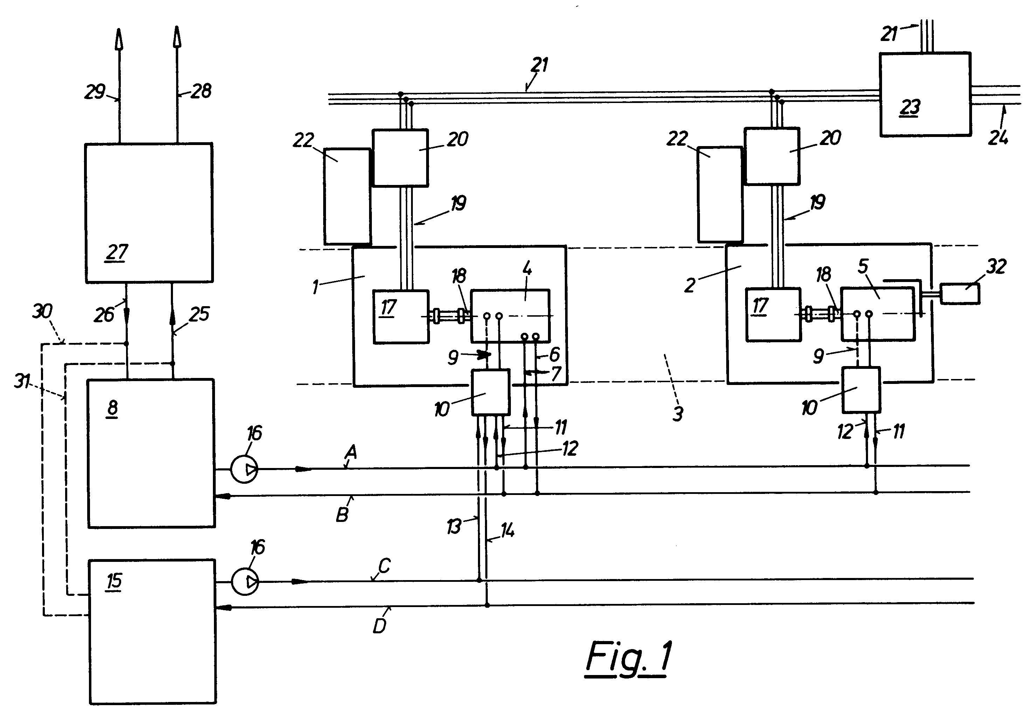

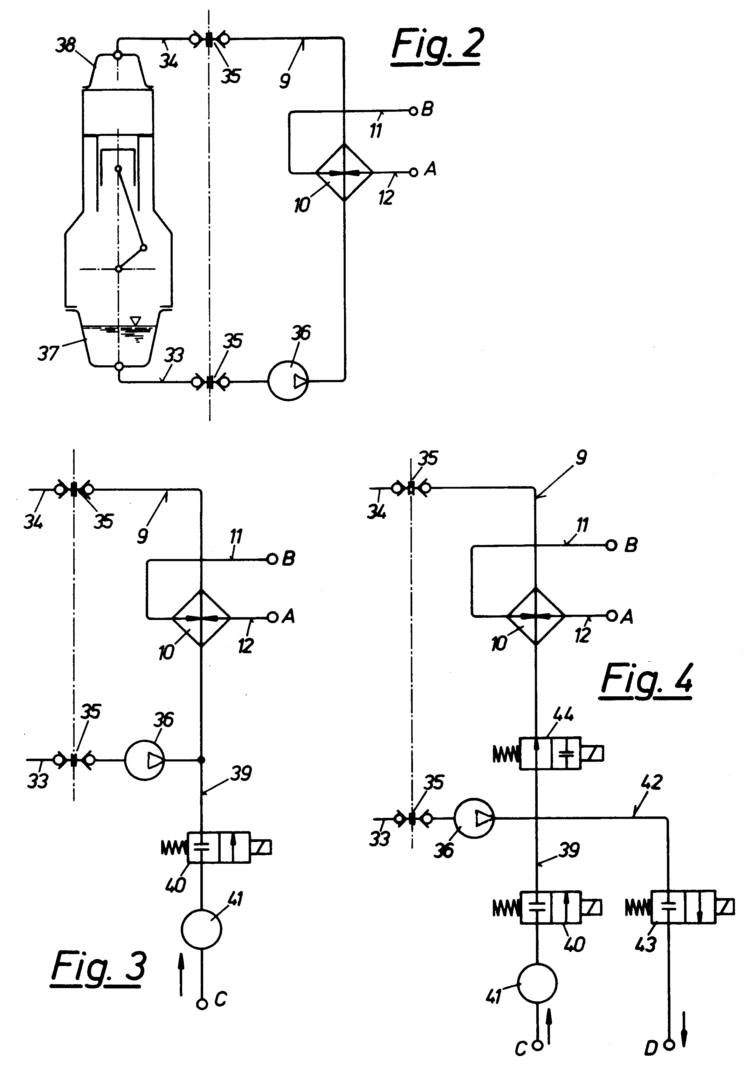

Die Erfindung wird im folgenden noch anhand der in der Zeichnung schematisch dargestellten Anordnungen näher erläutert. Fig. 1 zeigt dabei eine Anordnung nach der vorliegenden Erfindung in einer Prüfstandstraße, von der hier nur zweinebeneinanderliegende Prüfstände dargestellt sind, Fig. 2 zeigt ein Beispiel für einen Schmiermittel-Aufheizkreislauf einer erfindungsgemäßen Anordnung und die Fig. 3 und 4 zeigen jeweils auf andere Funktionen erweiterte Beispiele für Kreisläufe gemäß Fig. 2.

Die beiden Prüfstände 1 und 2 gemäß Fig. 1 sind Teile einer Straße 3 beispielsweise von Produktionsprüfständen, auf denen neu gefertigte Brennkraftmaschinen 4, 5 nach erfolgter Montage eingefahren, geprüft und eingestellt, bzw. abgenommen werden. Die Brennkraftmaschine 4 ist flüssigkeitsgekühlt, wobei die nicht weiter dargestellten Kühlräume über Anschlußleitungen 6, 7 und Sammelleitungen A, B mit einem Sammeltank 8 in Verbindung stehen, der beispielsweise auf 80°C aufgeheiztes Kühlmittel (üblicherweise Wasser) enthält.

Weiters ist die Brennkraftmaschine 4 mit flüssigem Schmiermittel geschmiert, wobei der ebenfalls nicht weiter dargestellte Schmiermittelkreislauf bzw. -sumpf über eine By-Pass-Leitung 9 abgezweigt und in einer Aufheizanordnung 10 aufgeheizt wird. Zu diesem Zwecke ist die Aufheizanordnung 10 über Leitungen 11, 12 wiederum mit den Sammelleitungen A, B für aufgeheiztes Kühlmittel verbunden, welches in einem Wärmetauscher in der Aufheizanordnung 10 das über die By-Pass-Leitung 9 fließende Schmiermittel aufwärmt.

Zur anfänglichen Zuführung, d.h. Neubefüllung der Brennkraftmaschine 4 auf dem Prüfstand 1 sind Schmiermittel-Anschlußleitungen 13, 14 mit der Aufheizanordnung 10 verbunden, welche andererseits mit Sammelleitungen C, D in Verbindung stehen, die zu einem Schmiermitteltank 15 führen und neben der Zuleitung von Schmiermittel zur Brennkraftmaschine 4 auch erforderlichenfalls dessen Rückleitung ermöglichen.

Sowohl in der Sammelleitung A für das Kühlmittel als auch in der Sammelleitung C für das Schmiermittel sind nahe den zugehörigen Tanks Pumpen 16 zur Förderung angedeutet.

Weiters weist der Prüfstand 1 noch eine elektrische Brems- und Schleppeinheit 17 auf, welche üblicherweise mechanisch mit der Kurbelwelle 18 der Brennkraftmaschine 4 gekoppelt ist und mittels Leitungen 19 über eine Steuereinheit 20 mit dem elektrischen Hausnetz 21 in Verbindung steht. Der Vollständigkeit halber ist auch noch auf eine Programmsteuerung 22 des Prüfstandes 1 zu verweisen, die den Prüfablauf steuert - zusätzliche Meßgeräte und dergleichen sind der Übersichtlichkeit halber nicht dargestellt.

Das elektrische Hausnetz 21 ist über eine Einheit 23, welche einen Transformator, einen Lastverteiler und gegebenenfalls auch einen geeigneten Energiepuffer enthalten kann, mit dem externen Netz 24 in Verbindung, in welches gegebenenfalls die über die Brems- und Schleppeinheit im Bremsbetrieb gewonnene elektrische Energie rückgespeist werden kann.

Über Leitungen 25, 26 ist der Sammeltank 8 für das aufgeheizte Kühlmittel mit einer Wärmetauschereinheit 27 mit integrierter Temperaturregelung verbunden, welche entweder bedarfsweise eine Aufheizung des Sammeltanks 8 oder aber eine Wärmeabgabe über eine Leitung 28 an die Gebäudeheizung oder eine Leitung 29 an die Umwelt ermöglicht. Über strichliert eingezeichnete Leitungen 30, 31 kann von der Wärmetauschereinheit 27 auch eine Heizung des Schmiermitteltanks 15 vorgenommen werden.

Auf der Prüfstandstraße 3 können dem beschriebenen Prüfstand 1 gleiche weitere Prüfstände in an sich beliebiger Anzahl an die Sammelleitungen A, B, C, D bzw. an das elektrische Hausnetz 21 angeschlossen sein, womit sich die Möglichkeit ergibt, die an einem Prüfstand beispielsweise in der Lastphase einer gerade geprüften Brennkraftmaschine abgegebene Kühlmittel- und/oder Schmiermittelwärme sowie die elektrische Bremsenergie an einem anderen Prüfstand, an dem sich die zu prüfende Brennkraftmaschine gerade in der Aufwärmphase befindet zu diesem Zwecke zu verwenden. Über die Tanks 8, 15 bzw. das elektrische Netz mit der Einheit 23 kann eine Pufferspeicherung für diese von allen Prüfständen gemeinsam bedarfsweise genutzten bzw. ergänzten Energien vorgenommen werden.

Der in der Darstellung gemäß Fig. 1 rechts vom Prüfstand 1 eingezeichnete Prüfstand 2 entspricht im wesentlichen Aufbau völlig dem Prüfstand 1-gleiche Teile sind mit gleichen Bezugszeichen versehen. Bezüglich der wesentlichen Funktionsbeschreibung wird zur Vermeidung von Wiederholungen auf die obenstehenden Ausführungen verwiesen.

Als ein wesentlicher Unterschied zum Prüfstand 1 ist auf dem Prüfstand 2 eine luftgekühlte Brennkraftmaschine 5 installiert, die anstelle der Anschlußleitungen 6, 7 für die Erwärmung des Kühlmittels nun eine Drosselanordnung 32 für die Herabsetzung des Luftdurchsatzes des nicht weiter dargestellten Kühlgebläses der Brennkraftmaschine 5 aufweist. Es kann dabei einlaß- und/oder auslaßseitig eine jeweils automatisch gesteuerte Abdeckeinrichtung vorgesehen sein, welche die Ansaug- und/oder Austrittsöffnung durch Querschnittsveränderung beeinflußt.

Weiters ist hier nun die Aufheizanordnung 10 für das Schmiermittel zwar mit den Sammelleitungen A, B für eine Erwärmung des über die By-Pass-Leitung 9 geführten Schmiermittels durch das aufgeheizte Kühlmittel aus dem Sammeltank 8 vorgesehen, jedoch ist - als Alternative zu der Anordnung beim Prüfstand 1 - hier keine Verbindung der Aufheizanordnung 10 zu den Schmiermittel-Sammelleitungen C, D vorgesehen, sodaß die Brennkraftmaschine 5 unabhängig vom Schmiermitteltank 15 mit Schmiermittel befüllt werden muß.

In allen Fällen kann entweder vorweg für einen bestimmten Typ von Brennkraftmaschine in Versuchsläufen festgelegt werden, ob bzw. welche der beschriebenen Zusatzmaßnahmen für eine rasche Erwärmung der jeweiligen Brennkraftmaschine im Aufwärmbetrieb erforderlich sind - davon abgesehen könnte aber natürlich auch beispielsweise über die Programmsteuerung abhängig von einer Referenztemperatur an der jeweiligen Brennkraftmaschine im einzelnen festgelegt werden, welche der zusätzlichen Erwärmungsmaßnahmen zu setzen sind. Auf alle Fälle ist zur Beschleunigung des Prüfbetriebes eine möglichst rasche, jedoch realitätsnahe Aufwärmung der Brennkraftmaschinen auf Betriebstemperatur zur Durchführung der weiteren Arbeiten am Prüfstand angestrebt. Mit den beschriebenen Einrichtungen und Maßnahmen kann dies auf energiesparende und umweltschonende Weise durchgeführt werden.

In Fig. 2 ist schematisch eine Brennkraftmaschine 4 dargestellt, bei der die By-Pass-Leitung 9 über Anschlußstücke 33, 34 mit Schnellschlußkupplungen 35 mit der hier als Schmiermittel/Kühlmittel-Wärmetauscher (üblicherweise Öl/Wasser-Wärmetauscher) ausgebildeten Aufheizanordnung 10 verbunden ist. Diese steht andererseits in bereits zu Fig. 1 beschriebener Weise über Leitungen 11, 12 mit den Sammelleitungen A, B zum Kühlmitteltank in Verbindung. Über eine Schmiermittelpumpe 36 wird das Schmiermittel vom tiefsten Punkt der Ölwanne 37 der Brennkraftmaschine 4 abgesaugt und nach Erwärmung in der Aufheizanordnung 10 an der höchsten Stelle (üblicherweise am Ventildeckel 38) wieder zugeführt, womit sich eine einfache und rasche Erwärmung der Gleitlager insbesonders an Nockenwelle und Kurbelwelle ergibt.

In Fig. 3 ist abweichend von Fig. 2 nun im unteren Bereich an die By-Pass-Leitung 9 eine Leitung 39 angeschlossen, welche über ein Elektroventil 40 und einen Mengenmesser 41 mit der Sammelleitung C (Fig. 1) zur Schmiermittelzuführung in Verbindung steht. Zur Befüllung einer an den Schnellschlußkupplungen 35 angeschlossenen Brennkraftmaschine braucht nur das Elektroventil 40 geöffnet und über den Mengenmesser 41 die richtige Schmiermittelmenge zugeführt zu werden.

Die gegenüber Fig. 3 wiederum erweiterte Ausführung nach Fig. 4 erlaubt zusätzlich zur Befüllung auch eine Entleerung des Schmiermittels, wenn dieses beispielsweise nach dem Einfahren einer Brennkraftmaschine wieder abgelassen werden soll. Abgesehen von den bereits zu Fig. 3 beschriebenen Bauteilen ist hier nun eine weitere Leitung 42 an der By-Pass-Leitung 9 angeschlossen, welche über ein weiteres Elektroventil 43 zur Schmiermittel-Sammelleitung D (Fig. 1) für die Rückführung zum Schmiermitteltank 15 angeschlossen ist. Zusätzlich ist noch ein Elektroventil 44 direkt in die By-Pass-Leitung 9 eingeschaltet, welches bei der Entleerung ebenso wie das By-Pass-Ventil 40 schließt.

## Patentansprüche

1. Verfahren zur Aufwärmung von auf einem Prüfstand betriebenen, jeweils über einen Kühlmittelstrom gekühlten und mit flüssigem Schmiermittel geschmierten Brennkraftmaschinen auf Betriebstemperatur, **dadurch gekennzeichnet**, daß - abhängig von einer Referenztemperatur, vorzugsweise der Temperatur des Schmiermittels, jeweils bedarfsweise zusätzlich zu weiteren Maßnahmen, bei denen z.B.
   a) die Wärmeabfuhr über den Kühlmittelstrom reduziert bzw. zur Wärmezufuhr umgekehrt wird, oder
   b) die Wärmeabfuhr über das Schmiermittel reduziert bzw. zur Wärmezufuhr umgekehrt wird -
   c) die Verlustleistung dadurch eröht wird, daß die jeweilige Brennkraft maschine mittels einer Schleppeinrichtung mit einer gegenüber der Nenndrehzahl erhöhten Drehzahl angetrieben wird.

2. Verfahren nach Anspruch 1, dadurch gekennzeichnet, daß bei flüssigkeitsgekühlten Brennkraftmaschinen im Schritt a) die Kühlräume der Brennkraftmaschine mit aufgeheiztem Kühlmittel, vorzugsweise mit einer Temperatur von annähernd 80°C, gefüllt und fortlaufend durchströmt werden.

3. Verfahren nach Anspruch 1, dadurch gekennzeichnet, daß bei luftgekühlten Brennkraftmaschinen im Schritt a) der Luftdurchsatz des Kühlgebläses, vorzugsweise durch Drosselung, herabgesetzt wird.

4. Verfahren nach einem oder mehreren der Ansprüche 1 bis 3, dadurch gekennzeichnet, daß im Schritt b) das Schmiermittel in einer By-Pass-Leitung aufgeheizt wird.

5. Verfahren nach einem oder mehreren der Ansprüche 2 bis 4, dadurch gekennzeichnet, daß zur Aufheizung des Kühlmittels und/oder des Schmiermittels zumindest zum Teil Kühlmittel und/oder Schmiermittel aus der Lastphase einer jeweils parallel geprüften Brennkraftmaschine verwendet wird.

6. Verfahren nach einem der Ansprüche 1 bis 5, dadurch gekennzeichnet, daß in Schritt c) die beim Bremsen in der Lastphase einer parallel geprüften Brennkraftmaschine anfallende Energie, vorzugsweise elektrische Energie, zur Betätigung der Schleppeinrichtung, vorzugsweise eines Elektromotors, verwendet wird.

7. Anordnung zur Aufwärmung von auf einem Prüfstand betriebenen, jeweils eine von Kühlmittel durchströmte Kühleinrichtung und eine Flüssigkeitsschmierung aufweisenden Brennkraftmaschinen auf Betriebstemperatur, **gekennzeichnet durch**
   a) eine Einrichtung (8) zur bedarfsweisen Reduzierung bzw. Umkehrung der Wärmeabfuhr über das Kühlmittel,
   b) eine Einrichtung (10,15) zur bedarfsweisen Reduzierung bzw. Umkehrung der Wärmeabfuhr über das Schmiermittel, und
   c) eine Schleppeinrichtung (17) zur bedarfsweisen Erhöhung der Verlustleistung, wozu die jeweilige Brennkraftmaschine (4,5) mit einer gegenüber der Nennzahl erhöhten Drehzahl schleppbar ist.

8. Anordnung nach Anspruch 7, dadurch gekennzeichnet, daß für flüssigkeitsgekühlte Brennkraftmaschinen (4) die Einrichtung gemäß a) eine an die Kühlräume der Brennkraftmaschine (4) über Verbindungsleitungen (6,7,A,B) anschließbare Aufheizanordnung (8,27) und vorzugsweise auch eine zugehörige Umwälzanordnung (16) für das Kühlmittel aufweist.

9. Anordnung nach Anspruch , dadurch gekennzeichnet, daß die Aufheizanordnung (8,27) zumindest zu einem Teil von einer Kühleinrichtung einer in der Lastphase befindlichen, parallel geprüften Brennkraftmaschine gebildet ist.

10. Anordnung nach Anspruch 7, dadurch gekennzeichnet, daß für luftgekühlte Brennkraftmaschinen (5) die Einrichtung gemäß a) eine Drosselanordnung (32) für die Herabsetzung des Luftdurchsatzes des Kühlgebläses aufweist.

11. Anordnung nach einem oder mehreren der Ansprüche 7 bis 10, dadurch gekennzeichnet, daß die Einrichtung gemäß b) eine in einer By-Pass-Leitung (9) des Schmiermittelkreislaufes der Brennkraftmaschinen (4,5) eingeschaltete Heizanordnung (10) aufweist.

12. Anordnung nach Anspruch 11, dadurch gekennzeichnet, daß die Heizanordnung (10) zumindest zu einem Teil von einer Kühleinrichtung einer in der Lastphase befindlichen, parallel geprüften Brennkraftmaschine gebildet ist.

13. Anordnung nach einem oder mehreren der Ansprüche 7 bis 12, dadurch gekennzeichnet, daß die Schleppeinrichtung (17) einen Elektromotor aufweist und mit einer im Bremsbetrieb elektrische Energie abgebenden Bremseinrichtung (17) einer parallel geprüften Brennkraftmaschine (4,5) in Verbindung steht.

Fig. 1

Fig. 2

Fig. 3

Fig. 4